**Europäisches Patentamt**

**European Patent Office**

**Office européen des brevets**

(19)

(11) Veröffentlichungsnummer: **0 096 797**
**B1**

# EUROPÄISCHE PATENTSCHRIFT

(12)

(45) Veröffentlichungstag der Patentschrift:
**13.08.86**

(21) Anmeldenummer: **83105358.2**

(22) Anmeldetag: **31.05.83**

(51) Int. Cl.⁴: **B 27 N 3/00**

(54) **Verfahren zur Herstellung von Spanholzwerkstoffen mit verringerter Formaldehydemission.**

(30) Priorität: **12.06.82 DE 3222195**

(43) Veröffentlichungstag der Anmeldung:
**28.12.83 Patentblatt 83/52**

(45) Bekanntmachung des Hinweises auf die Patenterteilung:
**13.08.86 Patentblatt 86/33**

(84) Benannte Vertragsstaaten:
**AT BE CH DE FR GB IT LI SE**

(56) Entgegenhaltungen:
**DD-A-149 182**
**DD-B-154 937**
**DE-B-2 439 660**
**DE-B-2 740 207**
**FR-A-1 351 692**
**GB-A-1 469 934**
**US-A-3 532 647**

(73) Patentinhaber: **BASF Aktiengesellschaft, Carl-Bosch- Strasse 38, D-6700 Ludwigshafen (DE)**

(72) Erfinder: **Merkel, Dieter, Dr., Homburger Strasse 8, D-6700 Ludwigshafen (DE)**
Erfinder: **Matthias, Guenther, Dr., Meergartenweg 25a, D-6710 Frankenthal (DE)**
Erfinder: **Diem, Hans, Dr., Feldbergstrasse 63, D-6800 Mannheim 25 (DE)**
Erfinder: **Wittmann, Otto, Max- Beckmann- Strasse 13b, D-6710 Frankenthal (DE)**

EP 0 096 797 B1

# Beschreibung

Kondensationsprodukte auf Basis Formaldehyd und Harnstoff und/oder Melamin sind wesentliche Bestandteile vom Aminoplastleimen, die bei der Herstellung von Spanholzwerkstoffen Verwendung finden.

Bei solchen aminoplastgebundenen Spanholzwerkstoffen stellt sich aber stets das Problem, die aus gesundheitlichen Gründen unerwünschte Formaldehydabspaltung, die bei der Produktion, wie auch bei den fertigen Spanholzwerkstoffen auftritt, auf ein Minimum zu beschränken.

Es besteht daher großes Interesse an Spanholzwerkstoffen, insbesondere an Spanplatten, mit geringer Formaldehydemission.

So sind viele Wege beschrieben, die eine Verringerung der Formaldehydemission zum Ziel haben.

Ein Möglichkeit besteht darin, die fertigen Spanplatten an ihren Flächen und Kanten zu beschichten bzw. zu bekleiden ("Spanplatten und Formaldehyd—Anwendungstechnische Eigenschaften", S. 21, Hersg. Verband der deutschen Holzwerkstoffindustrie e.V., 1981). Da dieses Verfahren aber erst nach Fertigstellung der Spanplatten angewendet werden kann, erscheint es aus arbeitsplatzhygienischen Gründen als ungenügend.

Man kann auch ein Bindemittel einsetzen, das noch weitere Komponenten, z.B. Polyisocyanat enthält. Dabei bleibt jedoch die Gefahr einer erheblichen Formaldehydabspaltung bestehen. Diese soll hierbei nach dem Vorschlag der EP—A—25 245 durch Zusatz von Melaminharz verhindert werden. Solche Bindemittel können jedoch nur zum Verleimen von Mittelschichten verwendet werden, da die niedermolekularen Anteile der Polyisocyanate (z.B. Diphenylmethandiisocyanate und daraus gebildete Präpolymere) leicht an die Presse ankleben. Eine zusätzliche Einschränkung der Anwendungsbreite ergibt sich durch die erforderliche Mitverwendung von Melaminharzen.

In der EP—A—2596 wird vorgeschlagen, der Leimflotte einen enolisierbaren Aldehyd oder ein enolisierbares Keton und gegebenenfalls ein Amin zuzusetzen. Dabei soll der freiwerdende Formaldehyd mittels einer Mannich-Reaktion abgefangen werden. Hierzu benötigt man aber große Mengen an Carbonylverbindung, so daß beim Preßvorgang anstelle der Formaldehydemission eine Emission der jeweiligen Carbonylverbindung stattfinden kann.

Eine andere Möglichkeit besteht darin, die Spanplatten unmittelbar nach ihrer Fertigstellung mit Formaldehyd-bindenden Mitteln zu bestreuen bzw. zu besprühen (DE—B—28 29 021 bzw. EP—A—27 583). Abgesehen davon, daß das Problem der Formaldehydabspaltung während des Preßvorgangs bestehen bleibt, müssen hierbei die Spanplatten in heißen Zustand eingestapelt und gelagert werden.

Die zu verleimenden Späne können auch, unabhängig vom Leimauftrag, mit einer wäßrigen Dispersion behandelt werden, die in der wäßrigen Phase z.B. gelösten Harnstoff und als disperse Phase ein Wachs enthält (DE—B—27 40 207). Dadurch wird nur der freigesetzte Formaldehyd vom zusätzlich eingebrachten Harnstoff gebunden. Bei diesem Verfahren muß aber die Handhabung der wäßrigen Hilfsdispersion genau beherrscht werden.

Schließlich kann man auch ein Leimharz verwenden, dessen Formaldehydgehalt von vornherein schon gering ist, d.h. ein Produkt mit einem erniedrigten Molverhältnis von Formaldehyd zu Harnstoff. Solche Leimharze zeigen aber eine Reihe von Nachteilen, z.B. verringerte Klebstoffeigenschaften, geringere Feuchtigkeitsbeständigkeit, erniedrigte Lagerfähigkeit, schlechte mechanische Eigenschaften der verleimten Produkte (Holz als Roh- und Werkstoff *36*, 298 (1978) und *27* 389 (1979)), die sich nur durch besondere Maßnahmen beheben lassen.

Es wurde nun gefunden, daß man Spanholzwerkstoffe mit verringerter Formaldehydemission durch Behandeln von Holzspänen bzw. zerkleinerten Holzbestandteilen mit einem wärme härtbaren Bindemittel auf der Grundlage eines Kondensationsproduktes aus Formaldehyd, Harnstoff und/oder Melamin und Verpressen der Späne unter Wärmeeinwirkung gemäß DE—B— 2 740 207, die auch den Oberbegriff des Anspruchs 1 bildet vorteilhaft erhält, wenn man die Späne vor der nach oder gleichzeitig mit dem Bindemittelauftrag und vor dem Verpressen mit einer wäßrigen Flüssigkeit behandelt, die Mittel zur Bindung von Formaldehyd sowie ein Thixotropie verursachendes Polysaccharid enthält.

Wärmehärtbare Bindemittel auf der Grundlage von Formaldehydkondensaten der Harnstoffs und/oder Melamins im Sinne der Erfindung sind die üblichen, zur Herstellung von Holzwerkstoffen verwendeten Bindemittel. Sie sind als wäßrige Lösungen oder Pulver im Handel und enthalten Harnstoff-Formaldehyd- und/oder Melamin-Formaldehyd-Kondensate. Auch Mischkondensate und Kondensate, die weitere Bestandteile, z.B. Phenol oder auch andere Aldehyde enthalten können, sind üblich. Ihre Herstellung und Verwendung ist allgemein bekannt und für die Erfindung ohne Belang.

Als Mittel zur Bindung von Formaldehyd im Verfahren gemäß Anspruch 1 werden Produkte verwendet, die Formaldehyd chemisch binden. Wie aus Anspruch 4 hervorgeht, enthalten diese Mittel 20 bis 50 Gew.-% eines Stoffes, ausgewählt unter Harnstoff, Cyanamid, Dicyaniamin, Ammoniumcyanat, Kaliumcyanat, Guanidinsalzen, Carbonsäureamiden, Salzen der Carbaminsäure oder Mischungen davon,

1 bis 5 Gew.-% eines Stoffes, ausgewählt unter Ammoniumsulfit, Ammoniumhydrogensulfit, Alkali- oder Erdalkalisulfit und

0,5 bis 2 Gew-% eines Thixotropie verursachenden Polysaccharids, sowie wenigstens 43 Gew.-% Wasser und ggf. weitere übliche Bestandteile,

wobei die Summe der in Gew.-% ausdrückten Bestandteile jeweils 100 ergibt.

Polysaccharide sind bekanntlich hochpolymere Kohlenhydrate, deren Einzelbausteine Monosaccharide oder Monosaccharid-Derivate darstellen. Diese Einzelbausteine besitzen Furanose- oder Pyranosestruktur und liegen in D-oder L-Form vor. Sie sind über α- oder β-(1,4)-glycosidische Bindungen miteinander verknüpft, wobei aber auch andere Kombinationen möglich sind, z.B. (1,3)-oder (1,6)-glycosidische Bindungen.

Je nachdem, ob die Polysaccharide aus einem oder verschiedenen Monosacchariden aufgebaut sind, unterscheidet man Homo- oder Heteropolysaccharide, z.B. Mannane, Xylane, Glucane, Galactane, Glucomannane, Galactomannane oder Arabinoxylane.

Die erfindungsgemäß zu verwendenden Polysaccharide, die im allgemeinen ein Molekulargewicht von 100.000 bis 500.000 besitzen, sollen in wäßrigem Medium Thixotropie verursachen. Unter Thixotropie versteht man den Effekt, daß durch Einwirkung von Scherkräften die vorher sehr hohe Viskosität fließender Stoffe stark erniedrigt wird, wobei sich nach Beendigung der Scherkrafteinwirkung die Viskosität zeitabhängig wieder erhöht. In der vorliegenden Erfindung soll darunter aber auch der Effekt verstanden werden, daß sich die Viskosität nach Beendigung der Scherkrafteinwirkung sofort wieder erhöht. Dieser Effekt wird im allgemeinen durch den Begriff "Strukturviskosität" charakterisiert.

Als für das erfindungsgemäße Verfahren besonders vorteilhafte Verbindungsklasse haben sich Mannane mit (1,4)-glycosidisch verknüpften β-D-Mannopyranosebausteinen ergeben. Insbesonder D-Galacto-D-mannane mit einem Verhältnis von D-Galactose zu D-Mannose von 1:2 und einem Molekulargewicht von etwa 200.000 bis 300.000 sind dabei zu nennen. Die α-D-Galactopyranosebausteine sind an jeden zweiten D-Mannosebaustein der Mannankette über eine (1,6)-glycosidische Bindung verknüpft.

Verbindungen dieser Art, deren freie OH-Funktionen durch Hydroxypropylierungs- und Carboxymethylierungsreaktionen partiell verethert sind, werden bevorzugt.

Polysaccharide sind wasserlösliche oder stark quellbare Stoffe, die kolloidale, hochviskose Lösungen oder Dispersionen ergeben. So sind unter wäßrigen Flüssigkeiten molekulare bzw. kolloidale Lösungen oder auch Dispersionen zu verstehen.

Solche wäßrigen Flüssigkeiten aus den oben genannten Komponenten enthalten in der Regel 20 bis 50 Gew.% vorzugsweis 35 bis 45 Gew.% der unter a) beschriebenen Substanzen, 1 bis 5 Gew.%, vorzugsweise 1 bis 2 Gew.%, der unter b) beschriebenen Substanzen, 0,5 bis 2 Gew.%, vorzugsweise 1 Gew.% eines Thixotropie verursachenden Polysaccharids und wenigstens 43 Gew.% Wasser und gegebenenfalls weitere Bestandteile, z.B. Hilfsmittel, Biocide, Fungizide, Gegebenenfalls kann die Menge des verwendeten Polysaccharids auch über die angegebenen Unter- bzw. Obergrenzen hinaus variiert werden.

Darüber hinaus ist es möglich, neben den genannten Thixotropie verursachenden Polysacchariden auch andere Thixotropiermittel mitzuverwenden.

Um eine besonders gute Quellfestigkeit der Spanplatten zu erreichen, kann man der wäßrigen Flüssigkeit 5 bis 200 Gew.%, bezogen auf die wäßrige Flüssigkeit, an Paraffindispersion zusetzen.

Eine so erhaltene wäßrige Flüssigkeit ist trotz ihrer hohen Viskosität gut handhab- und förderbar. Sie bildet dabei keine Beläge und Abscheidungen in Leitungen und Armaturen.

Weiterhin ist sie gut haltbar und zeigt Kältstabilität bis weit unter 0°C Kristallisationen, Abscheidungen, Aufrahmen oder Ausgasen können nicht festgestellt werden.

Beim erfindungsgemäßen Verfahren kann die wäßrige Flüssigkeit den Holzspänen vor oder nach oder gleichzeitig mit dem Bindemittelauftrag zugefügt werden. Die Zugabe läßt sich dabei auf technisch bekannten Wegen, die keinen wesentlichen zusätzlichen Aufwand verursachen, erreichen, z.B. Sprühen, Streichen, Mischen.

Es ist auch möglich, eine Abmischung mit dem Bindemittel vorzunehmen.

Entscheidend ist aber, daß die Zugabe der wäßrigen Flüssigkeit, die das Thixotropie erzeugende Polysaccharid enthält, zum Spangut vor dem unter Wärmeeinwirkung stattfindenden Preßvorgang erfolgt.

Die Nachteile, die bei anderen Verfahren durch die Zugabe eines Formaldehyd-bindenden Mittels auftreten und ihre Ursache in der Erniedrigung des Formaldehyd-Harnstoff-Molverhältnisses im Leimharz haben, sind beim erfindungsgemäßen Verfahren nicht zu beobachten.

Dies ist überraschend, da man wegen der Thixotropie der wäßrigen Flüssigkeit erwarten würde, daß sie sich während des Preßvorgangs, bei dem durch die einwirkenden Scherkräfte ihre Viskosität stark niedrig wird, sofort mit dem Leim mischt und durch Reaktion mit Formaldehyd dessen Formaldehyd-Harnstoff-Molverhältnis reduziert.

Anhand der folgenden Beispiele soll die einfache Erzeugung und Handhabung der erfindungsgemäßen wäßrigen Flüssigkeit und die stark herabgesetzte Formaldehydabspaltung bei Anwendung des erfindungsgemäßen Verfahrens gezeigt werden.

Die in den Beispielen angegebenen Prozente bzw. Teile sind Gewichtsprozente bzw. -teile.

Beispiel 1
Herstellung der Lösung

In 588 Teilen Wasser wurden bei Raumtemperatur 400 Teile Harnstoff und 20 Teile einer 50 %igen wäßrigen Lösung von Ammoniumhydrogensulfit gelöst. Durch Zugabe von 4 Teilen 25 %iger wäßriger Ammoniaklösung wurde ein pH-Wert von 7 eingestellt. Anschließend fügte man unter kräftigem Rühren innerhalb von 10 min 8 Teile eines partiell hydroxypropylierten und carboxymethylierten D-Galacto-D-mannans mit einem Molekulargewicht vn ca. 250.000 zu Man rührte nach, bis das D-Galacto-D-mannan gelöst war (ca. 1 Stunde) und die wäßrige Lösung die gewünschten thixotropen Eigenschaften besaß.

Beispiel 2
Herstellung von Spanplatten ohne Formaldehyd-bindende Mittel
a) 10.000 Teile Fichtenspäne wurden mit 2.222 Teilen einer Leimflotte bedüst. Die Leimflotte enthielt 54% Harnstoff-Formaldehyd-Kondensationsprodukte aus einem handelsüblichen Leimharz.
b) 10.000 Teile Fichtenspäne wurden mit 1.667 Teilen der unter a) beschriebenen Leimflotte bedüst.
c) Die gemäß a) und b) beleimten Späne wurden zu einem Vlies geschüttet, wobei die unter a) beschriebenen Späne zur Schüttung der Deckschichten und die unter b) beschriebenen Späne zur Schüttung der Mittelschicht verwendet wurden.

Das Spänevlies wurde in einer hydraulischen Presse bei 180°C 5,5 min lang auf eine Dicke vom 18 mm zusammengepreßt. Man erhielt eine Spanplatte mit einer Dichte von 650 kg/m³.
Die Platte wurde an ihrer Oberfläche plangeschliffen und bei Normklima 23/50 15 Tage bis zur Einstellung der Ausgleichfeuchte gelagert. Danach wurde die in Tabelle 1 genannten Kenndaten gemessen.

Beispiel 3
Herstellung von Spanplatten nach dem erfindungsgemäßen Verfahren
a) Auf 1.000 Teile der unter Beispiel 2, Abschnitt a) beleimten Späne wurden 20 Teile der gemäß Beispiel 1 hergestellten Lösung aufgetragen.
b) Auf 1.000 Teil der unter Beispiel 2, Abschnitt b) beleimten Späne wurden 40 Teile der gemäß Beispiel 1 hergestellten Lösung aufgetragen.
Die so verbereiteten Späne wurden analog Beispiel 2, Abschnitt c) zu einem Spänevlies geschüttet und unter den genannten Bedingungen gepreßt und weiterbehandelt.

TABELLE 1

|  |  | Beispiel 2 | Beispiel 3 |
|---|---|---|---|
| Dichte | [kg/m³] | 650 | 657 |
| Scherfestigkeit V20 | [N/mm²] | 2,82 | 2,57 |
| Quellung nach 2 Std. | [%] | 3,9 | 3,6 |
| Quellung nach 24 Std. | [%] | 16,5 | 14,4 |
| Formaldehydabgabe nach FESYP | | 39 | 8 |

[mg Formaldehyd/100 g atro Platte]

## Patentansprüche

1. Verfahren zur Herstellung von Spanholzwerkstoffen mit verringerter Formaldehydemission durch Behandeln von Holzspänen bzw. zerkleinerten Holzbestandteilen mit einem wärmehärtbaren Bindemittel auf der Grundlage eines Kondensationsproduktes aus Formaldehyd, Harnstoff und/oder Melamin und Verpressen der Späne unter Wärmeeinwirkung, dadurch gekennzeichnet, daß man die Späne vor oder nach oder gleichzeitig mit dem Bindemittelauftrag und vor dem Verpressen mit einer wäßrigen Flüssigkeit behandelt, die Mittel zur Bindung von Formaldehyd sowie ein Thixotropie verursachendes Polysaccharid enthält.
2. Verfahren gemäß Anspruch 1, dadurch gekennzeichnet, daß man als Polysaccharid ein D-Galacto-D-mannan mit einem Molekulargewicht von 200.000 bis 300.000 verwendet.
3. Verfahren gemäß den Ansprüchen 1 und 2, dadurch gekennzeichnet, daß man ein D-Galacto-D-mannan verwendet, das partiell verethert ist.

4. Wäßrige Flüssigkeit mit Formaldehyd-bindendem Mittel zur Verwendung bei dem Verfahren gemäß Anspruch 1, enthaltend
20 bis 50 Gew.-% eines Stoffes, ausgewählt unter Harnstoff, Cyanamid, Dicyaniamin, Ammoniumcyanat, Kaliumcyanat, Guanidinsalzen, Carbonsäureamiden, Salzen der Carbaminsäure oder Mischungen davon,
1 bis 5 Gew.-% eines Stoffes, ausgewählt unter Ammoniumsulfit, Ammoniumhydrogensulfit, Alkali- oder Erdalkalisulfit und
0,5 bis 2 Gew.-% eines Thixotropie verursachenden Polysaccharids, sowie wenigstens 43 Gew.-% Wasser und ggf. weitere übliche Bestandteile,
wobei die Summe der in Gew-% ausdrückten Bestandteile jeweils 100 ergibt.

## Revendications

1. Procédé de fabrication de matériaux en copeaux de bois avec émission réduite de formaldéhyde, par traitement de copeaux de bois ou de constituants du bois réduits en petits morceaux avec un liant thermodurcissable à base d'un produit de condensation de formaldéhyde, d'urée et/ou de mélamine, et pressage des copeaux avec application de chaleur, caractérisé en ce qu'avant, après ou en même temps que l'application du liant, les copeaux sont traités par un liquide aqueux, qui contient des agents pour la fixation du formaldéhyde ainsi qu'un polysaccharide provoquant la thixotropie.

2. Procédé selon la revendication 1, caractérisé en ce qu'on utilise, en tant que polysaccharide, un D-galacto-D-mannane ayant un poids moléculaire de 200 000 à 300 000.

3. Procédé selon la revendication 1 ou 2, caractérisé en ce qu'on utilise un D-galacto-D-mannane qui est partiellement éthérifié.

4. Liquide aqueux contenant des agents fixant le formaldéhyde, destiné à être utilisé dans le procédé selon la revendication 1, contenant 20 à 50% en poids d'une substance choisie parmi l'urée, le cyanamide, la dicyandiamine, le cyanate d'ammonium, le cyanate de potassium, des sels de guanidine, des amides d'acides carboxyliques, des sels de l'acide carbamique ou des mélanges de ces substances, 1 à 5% en poids d'une substance choisie parmi le sulfite d'ammonium, l'hyxrogénosulfite d'ammonium, un sulfite alcalin ou alcalinoterreux, et 0,5 à 2% en poids d'une polysaccharide provoquant la thixotropie, ainsi qu'au moins 43% en poids d'eau et, le cas échéant, d'autres constituants usuels, la somme des constituants exprimée en % en poids s'élevant à 100.

**Claims**

1. A process for the production of wood chip materials, exhibiting reduced formaldehyde emission, by treating wood chips or particles with a thermosetting binder based on a condensate of formaldehyde, urea and/or melamine, and compressing the chips while applying heat, wherein the chips are treated with an aqueous liquid, containing a formaldehyde-binding agent and a polysaccharide causing thixotropy, before, after, or simultaneously with, the application of the binder, and prior to compression.

2. A process as claimed in claim 1, wherein a D-galacto-D-mannan having a molecular weight of from 200,000 to 300,000 is used as the polysaccharide.

3. A process as claimed in claims 1 and 2, wherein a partially etherified D-galacto-D-mannan is employed.

4. An aqueous liquid, comprising a formaldehyde-binding agent, for use in a process as claimed in claim 1, which contains 20 to 50% by weight of a compound selected from the group consisting of urea, cyanamide, dicyandiamine, ammonium cyanate, potassium cyanate, guandine salts, carboxylic acid amides, salts of carbamic acid, and mixtures thereof, 1 to 5% by weight of a compound selected from the group consisting of ammonium sulfite, ammonium bisulfite, and alkali metal or alkaline earth metal sulfite, 0.5 to 2% by weight of a polysaccharide causing thixotropy, and at least 43% by weight of water and, if desired, other conventional components, the sum of the components expressed in % by weight being 100 in each case.